# EUROPÄISCHE PATENTSCHRIFT

(11) **EP 2 401 907 B1**
(45) Veröffentlichungstag und Bekanntmachung des Hinweises auf die Patenterteilung: **06.03.2013**
(21) Anmeldenummer: 11168147.4
(22) Anmeldetag: 31.05.2011
(51) Int. Cl.: A01D 43/08, A01D 90/02

(54) **Förderer, insbesondere für eine Maschine zum Mähen von stängelartigem Erntegut**
Transport device, preferably for a machine for mowing stalk crops
Dispositif de transport, en particulier pour une machine pour faucher des plantes à tiges

(30) Priorität: 02.07.2010 DE 102010030857
(43) Veröffentlichungstag der Anmeldung: 04.01.2012
(73) Patentinhaber: Maschinenfabrik Kemper GmbH & Co. KG, 48973 Stadtlohn (DE)
(72) Erfinder: Grobmeier, Jens, 48703 Stadtlohn (DE); Rickert, Clemens, 49683 Ahaus (DE); Hüning, Martin, 48727 Billerbeck (DE); Weitenberg, Klemens, 46325 Borken (DE); Schulze Hockenbeck, Leo, 48351 Everswinkel (DE); Robert, Ralf, 48703 Stadtlohn (DE); Schnelting, Mathias, 46354 Suedlohn (DE)
(74) Vertreter: Holst, Sönke

(56) Entgegenhaltungen:
- EP-A1- 0 760 200
- DE-A1- 3 308 077
- DE-A1- 10 249 458
- DE-A1- 19 501 382
- US-B1- 6 769 239

## Beschreibung

Die Erfindung betrifft einen Förderer nach dem Oberbegriff des Anspruchs 1.

### Stand der Technik

Mähvorsätze werden in der Landwirtschaft verwendet, um stängelartiges Erntegut, beispielsweise Mais- oder Getreidepflanzen, vom Boden eines Felds abzuschneiden und einem die Maschine tragenden Feldhäcksler zuzuführen, in dem die Pflanzen gehäckselt und auf einen Ladebehälter auf einem Anhänger ausgetragen werden. Derartige Mähvorsätze weisen eine Anzahl seitlich nebeneinander angeordneter, reihenunabhängig arbeitender Mäh- und Einzugseinrichtungen in Form von um die Hochachse rotierenden Fördertrommeln mit Förderscheiben mit um ihren Rand verteilten Zähnen und dazwischen befindlichen Aussparungen, in denen die Pflanzenstängel Aufnahme finden, und unterhalb der Förderscheiben angebrachten Mähscheiben auf, die zum Abschneiden der Pflanzenstängel vom Erdboden dienen. Hierzu sei auf den Stand der Technik nach DE 10 2006 048 659 A1 verwiesen, bei der mehrere Förderscheiben mit um ihren Rand verteilten Zähnen übereinander an einer Trommel angeordnet sind. In den Zwischenraum zwischen in vertikaler Richtung aufeinander folgenden Förderscheiben greifen Abstreifer ein, die sich jeweils aus horizontalen oberen Platten, horizontalen unteren Platten und dazwischen angeordneten, vertikalen Führungszungen zusammensetzen. Die Abstreifer entfernen das Erntegut aus den Aussparungen der Förderscheiben; es wird dann durch weitere Fördertrommeln und/oder Mäh- und Einzugseinrichtungen abtransportiert und dem Einzugskanal des Feldhäckslers zugeführt. Eine ähnliche Anordnung der Förderscheiben, jedoch mit einem in vertikaler Richtung zwischen den Förderscheiben angeordneten, rotierenden Abstreifer, dessen Drehachse sich innerhalb des Hüllkreises der Förderscheiben befindet, wird in der DE 195 35 453 A1 gezeigt.

In der als gattungsbildend angesehenen EP 0 760 200 A1 sind mehrere Förderscheiben mit unterschiedlichen Abständen übereinander angeordnet.

Förderer mit mehreren, im Abstand voneinander an einer Trommel angebrachten Förderscheiben mit um ihren Rand verteilten Zähnen finden auch bei Geräten zur Grasemte Verwendung, bei denen sie stromab einer mit Zinken ausgestatteten Aufnehmertrommel angeordnet sind, um das Erntegut in einen Ballenbildungsraum einer Ballenpresse oder den Laderaum eines Ladewagens zu fördern. Auch hier sind die Förderscheiben üblicherweise jeweils gleich beabstandet (DE 100 179 84 A1).

Die Förderer der bekannten Mäh- und Einzugseinrichtungen eignen sich gut zur Ernte von Pflanzen mit relativ dicken Stängeln, wie Mais. Bei dünneren und/oder weicheren Pflanzenstängeln, beispielsweise von Getreide oder Gräsern, erweist sich ihre Förderwirkung oftmals als nicht hinreichend, da die Pflanzen keine hinreichende Abstützung finden.

### Aufgabenstellung

Die der Erfindung zu Grunde liegende Aufgabe wird darin gesehen, einen Förderer bereitzustellen, der sich für eine Mäh- und Einzugseinrichtung für eine Maschine zum Mähen von stängelartigem Erntegut eignet und auch dünnere und/oder weichere Pflanzen zufriedenstellend fördern kann.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Förderer mit mehreren koaxial zueinander angeordneten, um eine gemeinsame zentrische Drehachse in Rotation versetzbaren Förderscheiben, um deren Rand Zähne verteilt sind, umfasst mindestens drei Förderscheiben, von denen zwei Förderscheiben in einem relativ geringen Abstand und die dritte in einem demgegenüber größeren Abstand von den beiden Förderscheiben angeordnet ist. Mit anderen Worten sind eine erste Förderscheibe und eine zweite, der ersten Förderscheibe unmittelbar benachbarte Förderscheibe in einem geringeren axialen Abstand angeordnet als die dritte, der zweiten Förderscheibe unmittelbar benachbarte Förderscheibe, die auf der von der ersten Förderscheibe abgewandten Seite der zweiten Förderscheibe angeordnet ist, von der zweiten Förderscheibe beabstandet ist. Unter zwei unmittelbar benachbarten Förderscheiben ist hier zu verstehen, dass sich keine weitere Förderscheibe zwischen den beiden unmittelbar benachbarten Förderscheiben befindet.

Es auch eine vierte Förderscheibe vorgesehen, die der dritten Förderscheibe unmittelbar benachbart und auf der von der zweiten Förderscheibe abgewandten Seite der dritten Förderscheibe angeordnet ist. Auch die vierte Förderscheibe ist in einem geringeren axialen Abstand von der dritten Förderscheibe angeordnet ist als die dritte Förderscheibe von der zweiten Förderscheibe beabstandet ist.

Um das Erntegut aus dem Förderer abgabeseitig zu entnehmen, ist ein aus einem flachen Blech bestehender Abstreifer vorgesehen, der in den Raum zwischen der ersten und zweiten Förderscheibe eingreift und enge Spalte zwischen sich und der ersten und zweiten Förderscheibe freilässt, die so klein sind, dass der Ausräumer keinen Erntegutstängel mehr zwischen der ersten und zweiten Förderscheibe belässt. Die Ebene des Abstreifers erstreckt sich in einer parallel zur Ebene der ersten (und der zweiten) Förderscheibe verlaufenden Ebene. Analog ist ein derartiger, aus einem einzigen Blech bestehender Abstreifer zwischen der dritten und der vierten Förderscheibe angeordnet.

Der Abstand zwischen der zweiten und dritten Förderscheibe ist hingegen größer als der Abstand zwischen der ersten und zweiten Förderscheibe. In diesen Abstand greift ein an sich bekannter Abstreifer ein, der eine sich quer zu den Ebenen der Förderscheiben erstreckende Führungszunge aufweist.

Auf diese Weise wird die Förderwirkung verbessert, denn die zwei in axialer Richtung nur geringfügig beabstandeten Förderscheiben bilden eine größere Führungsfläche für das Erntegut als eine einzelne Förderscheibe.

Die Förderscheiben werden vorzugsweise konzentrisch an einer rotierbaren Trommel befestigt. Ein derartiger Förderer kann insbesondere an einer Mäh- und Einzugseinrichtung einer Maschine zum Ernten von stängelartigem Erntegut verwendet werden. Die Mäh- und Einzugseinrichtung umfasst eine untere Schneidscheibe zum Abschneiden der Pflanzenstängel vom im Boden verbleibenden Stumpf und einer darüber angeordneten, um eine vertikale Achse in Drehung versetzbaren erfindungsgemäßen Förderer. Weiterhin kann der Förderer an einer Maschine zur Aufnahme von Erntegut (z. B. Ballenpresse oder Ladewagen) mit einer mit Zinken besetzten Aufnehmertrommel verwendet werden. Der erfindungsgemäße Förderer ist dort stromab der Aufnehmertrommel angeordnet.

### Ausführungsbeispiel

In der Zeichnung ist ein nachfolgend näher beschriebenes Ausführungsbeispiel der Erfindung dargestellt. Es zeigt:

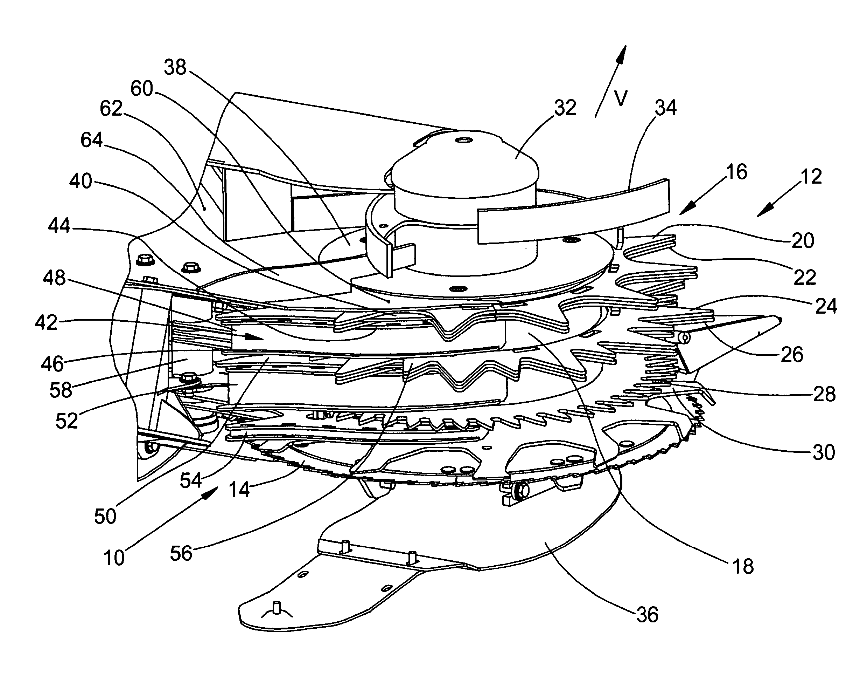

- Fig. 1: eine perspektivische Ansicht einer mit einem erfindungsgemäßen Förderer ausgestatteten Mäh- und Einzugseinrichtung und die ihr benachbarten Bereiche einer Maschine zum Ernten von stängelartigem Erntegut.

In der Figur ist ein Teilbereich einer Maschine 10 zum Ernten von stängelartigem Erntegut, insbesondere Mais, in einer schematischen Draufsicht dargestellt. Die Maschine 10 wird zum Erntebetrieb an einem mit Vorpresswalzen ausgestatteten Einzugskanal eines selbstfahrenden Feldhäckslers, der in der Figur nicht eingezeichnet ist, befestigt und wird von ihm im Erntebetrieb in einer Fahrtrichtung V über ein abzuerntendes Feld bewegt. Im Folgenden beziehen sich Richtungsangaben, wie vorn und hinten, auf die Vorwärtsrichtung V. Die Maschine 10 umfasst eine Mäh- und Einzugseinrichtung 12, die sich aus einer drehbaren, unteren Schneidscheibe 14 und einem koaxial darüber angeordneten, drehbaren Förderer 16 aufbaut. Der Förderer 16 umfasst eine zentrische, kreiszylindrische Trommel 18 und insgesamt sechs Förderscheiben 20 bis 30 mit um ihren Umfang verteilten Zähnen, zwischen denen Ausbuchtungen zur Aufnahme von Pflanzenstängeln verbleiben. Die Trommel 18 kann sich aus mehreren rohrförmigen Abschnitten unterschiedlichen Durchmessers zusammensetzen, zwischen denen jeweils die Förderscheiben 20 bis 30 angeordnet sind. Die Oberseite der Trommel 20 wird durch einen topfartigen Deckel 32 mit nach außen ragenden Mitnehmern 34 gebildet.

Anders als in der Figur 1 dargestellt, umfasst die Maschine 10 in der Regel mehrere, seitlich nebeneinander angeordnete Mäh- und Einzugseinrichtungen 12. Das Erntegut wird jeweils an den Rückseiten der Mäh- und Einzugseinrichtungen 12 durch diese oder im Zusammenwirken mit Querfördertrommeln und/oder Schrägfördertrommeln (s. DE 195 31 918 A1) an den Einzugskanal des Feldhäckslers übergeben.

Die Schneidscheibe 14 und der Förderer 16 mit den Förderscheiben 20 bis 30 stehen mit einem Getriebe 36 in Antriebsverbindung, das im Erntebetrieb durch einen zugeordneten Antriebsstrang vom Feldhäcksler her angetrieben wird und die Schneidscheibe 14 und den Förderer 16 um eine vertikale (oder gegenüber der Vertikalen leicht nach vorn geneigte) Achse rotieren lässt, wobei die Schneidscheibe 14 in der Regel mit einer höheren Drehzahl rotiert als der Förderer 16. Das Getriebe 36 ist an einem Rahmen (nicht gezeigt) der Maschine befestigt.

Eine erste Förderscheibe 20 und eine zweite, unmittelbar darunter angeordnete Förderscheibe 22 sind am oberen Rand der Trommel 18 angeordnet. Eine obere Abdeckscheibe 38 ist zwischen dem Deckel 32 und der ersten Förderscheibe 20 angeordnet. Der Abstand zwischen der ersten Förderscheibe 20 und der zweiten Förderscheibe 22 ist relativ klein, sodass nur ein erster Abstreifer 40 in Form eines Blechs, das parallel zur Ebene der Förderscheiben 20, 22 liegt, in den Zwischenraum zwischen den Förderscheiben 20, 22 hineinpasst. Die dritte Förderscheibe 24 ist in einem größeren Abstand unterhalb der zweiten Förderscheibe 22 angeordnet. In diesen Abstand greift ein zweiter Abstreifer 42 ein, der sich aus einer ersten Platte 44, einer zweiten Platte 46 und einer dazwischen angeordneten Führungszunge 48 zusammensetzt. Die vierte Förderscheibe 26 ist hingegen, wie die erste und zweite Förderscheibe 20, 22, in einem geringen Abstand unterhalb der dritten Förderscheibe 24 angebracht. Auch hier passt nur ein dritter Abstreifer 50 in Form eines Blechs, das parallel zur Ebene der Förderscheiben 24, 26 liegt, in den Zwischenraum zwischen den Förderscheiben 24, 26 hinein.

Die fünfte Förderscheibe 28 ist wieder in einem größeren Abstand unterhalb der vierten Förderscheibe 26 positioniert, wie auch die sechste Förderscheibe 30 in einem größeren Abstand unterhalb der fünften Förderscheibe 28 angeordnet ist. In den Abstand zwischen der vierten und fünften Förderscheibe 26, 28 greift ein vierter Abstreifer 52 ein, der sich aus einer ersten Platte, einer zweiten Platte und einer dazwischen angeordneten Führungszunge aufbaut. Analog greift in den Abstand zwischen der fünften und der sechsten Förderscheibe 28, 30 ein fünfter Abstreifer 54 ein, der sich aus einer ersten Platte, einer zweiten Platte und einer dazwischen angeordneten Führungszunge zusammensetzt, aber niedriger als der zweite und vierte Abstreifer 42, 52 ist.

Die erste und zweite Förderscheibe 20, 22 sind mit relativ großen Zähnen ausgestattet, zwischen denen auch relativ große Ausbuchtungen zur Aufnahme von Pflanzenstängeln verbleiben. Die Zahnform der dritten und vierten Förderscheibe 24, 26 entspricht der der ersten und zweiten Förderscheibe 20, 22, wobei jedoch im Zahngrund ein kleinerer Mitnehmer 56 vorhanden ist, der eine kleinere Abmessung in radialer und Umfangsrichtung als die eigentlichen Zähne aufweist. Die Zähne der fünften Förderscheibe 28 sind kleiner und näher beabstandet als die der ersten bis vierten Förderscheibe 20 bis 26. Die Zähne der sechsten Förderscheibe 30 und die dazwischen verbleibenden Ausbuchtungen sind hingegen etwa so groß wie die der ersten und zweiten Förderscheibe 20,22, jedoch hakenförmig und außen nach unten abgewinkelt. Die Abstreifer 40, 42, 50, 52 und 54 und eine in einen oberen, unmittelbar oberhalb der ersten Förderscheibe 20 positionierten Abstreifer 60 auslaufende Deckplatte 62, die auch noch einen rückwärtigen Abstreifer 64 trägt, sind an einem Pfosten 58 befestigt, der seinerseits am Rahmen der Maschine 10 abgestützt ist.

Ein Unterschied zwischen dem erfindungsgemäßen Förderer 16 und bisher gebräuchlichen

Förderern für derartige Maschinen 10 besteht in der Bereitstellung der zweiten und vierten Förderscheibe 22, 26 und des ersten und des dritten Abstreifers 40, 50. Die zugefügten Förderscheiben 22, 26 vergrößern die zur Annahme und Abförderung der Pflanzen zur Verfügung stehenden Flächen an den in Drehrichtung vorn liegenden Seiten der Zähne, was die Ernte von dünn- und/oder weichstängeligen Pflanzen erleichtert. Die Abstreifer 40, 50 heben die Pflanzen aus den Ausbuchtungen heraus. Die Abstände zwischen den Abstreifern 40, 50 und den jeweils benachbarten Förderscheiben 20 bis 26 sind derart klein dimensioniert, dass (auch bei der Ganzpflanzensilageernte von Getreidepflanzen) keine Pflanzenstängel darin hineinpassen.

Die Funktionsweise der Maschine 10 ist nach alledem Folgende. Beim Erntebetrieb werden die Schneidscheibe 14 und die Trommel 18 durch das Getriebe 36 um die Achse in Rotation versetzt. Auf einem Feld stehende Pflanzen werden durch die Schneidscheibe 14 von den im Boden verbleibenden Stümpfen abgetrennt und in den Ausbuchtungen der Förderscheiben 20 bis 30 aufgenommen, durch die Abstreifer 40, 42, 50, 52 und 54 aus den Ausbuchtungen herausgehoben und zum Feldhäcksler hin abtransportiert.

## Patentansprüche

1. Förderer (16) mit mehreren koaxial zueinander angeordneten, um eine gemeinsame zentrische Drehachse in Rotation versetzbaren Förderscheiben (20-30), um deren Rand Zähne verteilt sind, wobei eine erste Förderscheibe (20) und eine zweite, der ersten Förderscheibe (20) unmittelbar benachbarte Förderscheibe (22) in einem geringeren axialen Abstand angeordnet sind als eine dritte, der zweiten Förderscheibe (22) unmittelbar benachbarte Förderscheibe (24), die auf der von der ersten Förderscheibe (20) abgewandten Seite der zweiten Förderscheibe (22) angeordnet ist, von der zweiten Förderscheibe (22) beabstandet ist, ein zweiter Abstreifer (42), der eine sich quer zu den Ebenen der Förderscheiben (20, 22, 24) erstreckende Führungszunge (48) aufweist, in den Raum zwischen der zweiten und dritten Förderscheibe (22, 24) eingreift, und eine vierte Förderscheibe (26) der dritten Förderscheibe (24) unmittelbar benachbart und auf der von der zweiten Förderscheibe (22) abgewandten Seite der dritten Förderscheibe (24) in einem geringeren axialen Abstand von der dritten Förderscheibe (24) angeordnet ist als die dritte Förderscheibe (24) von der zweiten Förderscheibe (22) beabstandet ist, **dadurch gekennzeichnet, dass** ein aus einem flachen Blech bestehender erster Abstreifer (40), der sich in einer parallel zur Ebene der ersten Förderscheibe (20) verlaufenden Ebene erstreckt, in den Raum zwischen der ersten und zweiten Förderscheibe (20, 22) eingreift und enge Spalte zwischen sich und der ersten und zweiten Förderscheibe (20, 22) freilässt, und dass ein aus einem flachen Blech bestehender dritter Abstreifer (50), der sich in einer parallel zur Ebene der ersten Förderscheibe (20) verlaufenden Ebene erstreckt, in den Raum zwischen der dritten und vierten Förderscheibe (24, 26) eingreift und enge Spalte zwischen sich und der dritten und vierten Förderscheibe (24, 26) freilässt.

2. Förderer (16) nach Anspruch 1, **dadurch gekennzeichnet, dass** eine fünfte Förderscheibe (28) und vorzugsweise eine sechste Förderscheibe (30) unterhalb der ersten bis vierten Förderscheibe (20-26) angeordnet ist oder sind.

3. Förderer (16) nach einem der Ansprüche 1 oder 2, **dadurch gekennzeichnet, dass** bei der dritten und vierten Förderscheibe (24, 26) im Zahngrund ein Mitnehmer (56) vorhanden ist, der eine kleinere Abmessung in radialer und Umfangsrichtung als die Zähne aufweist.

4. Förderer (16) nach einem der Ansprüche 1 bis 3, **dadurch gekennzeichnet, dass** die Förderscheiben (20-30) konzentrisch an einer rotierbaren Trommel (18) befestigt sind.

5. Mäh- und Einzugseinrichtung (12) für eine Maschine (10) zum Ernten von stängelartigem Erntegut, mit einer unteren Schneidscheibe (14) und einem darüber angeordneten, um eine vertikale Achse in Drehung versetzbaren Förderer (16) nach einem der vorhergehenden Ansprüche.

6. Maschine zur Aufnahme von Erntegut mit einer mit Zinken besetzten Aufnehmertrommel und einem stromab der Aufnehmertrommel angeordneten Förderer nach einem der Ansprüche 1 bis 4.

## Claims

1. Conveyor (16) having a plurality of conveyor discs (20-30) which are arranged coaxially with respect to one another, can be set into rotation about a common central axis of rotation and about the edge of which teeth are distributed, wherein a first conveyor disc (20) and a second conveyor disc (22) directly adjacent to the first conveyor disc (20) are arranged at a smaller axial distance than a third conveyor disc (24) which is arranged directly adjacent to the second conveyor disc (22) and is arranged on that side of the second conveyor disc (22) which faces away from the first conveyor disc (20), and is spaced apart from the second conveyor disc (22), and a second scraper (42) which has a guide tongue (48) extending transversely with respect to the planes of the conveyor discs (20, 22, 24) engages in the space between the second and third conveyor discs (22, 24), and a fourth conveyor disc (26) is directly adjacent to the third conveyor disc (24) and, on that side of the third conveyor disc (24) which faces away from the second conveyor disc (22), is arranged at a smaller axial distance from the third conveyor disc (24) than the distance at which the third conveyor disc (24) is spaced apart from the second conveyor disc (22), **characterized in that** a first scraper (40) which is composed of flat sheet metal and extends in a plane parallel to the plane of the first conveyor disc (20) engages in the space between the first and second conveyor discs (20, 22) and leaves free narrow gaps between itself and the first and second conveyor discs (20, 22), and **in that** a third scraper (50) which is composed of flat sheet metal and extends in a plane running parallel to the plane of the first conveyor disc (20) engages in the space between the third and fourth conveyor discs (24, 26) and leaves free narrow gaps between itself and the third and fourth conveyor discs (24, 26).

2. Conveyor (16) according to Claim 1, **characterized in that** a fifth conveyor disc (28) and preferably a sixth conveyor disc (30) are or is arranged below the first to fourth conveyor discs (20-26).

3. Conveyor (16) according to either of Claims 1 and 2, **characterized in that** there is a driver (56) in the tooth base in the case of the third and fourth conveyor discs (24, 26), said driver being smaller in the radial and circumferential directions than the teeth.

4. Conveyor (16) according to one of Claims 1 to 3, **characterized in that** the conveyor discs (20-30) are fastened concentrically on a rotatable drum (18).

5. Mowing and gathering device (12) for a machine (10) for harvesting stalk crops, with a lower cutting disc (14) and a conveyor (16) which is arranged thereabove and can be set into rotation about a vertical axis, according to one of the preceding claims.

6. Machine for picking up crops with a pick-up drum with tines around the edges and a conveyor which is arranged downstream of the pick-up drum, according to one of Claims 1 to 4.

## Revendications

1. Dispositif de transport (16), comprenant plusieurs disques de transport (20-30) disposés coaxialement les uns par rapport aux autres et pouvant être mis en rotation autour d'un axe de rotation central commun, autour du bord desquels sont réparties des dents, un premier disque de transport (20) et un deuxième disque de transport (22) immédiatement adjacent au premier disque de transport (20) étant disposés à une distance axiale inférieure à la distance entre le deuxième disque de transport (22) et un troisième disque de transport (24) immédiatement adjacent au deuxième disque de transport (22) et disposé du côté du deuxième disque de transport (22) opposé au premier disque de transport (20), un deuxième dispositif de raclage (42), qui présente une langue de guidage (48) s'étendant transversalement aux plans des disques de transport (20, 22, 24), venant en prise dans l'espace entre le deuxième et le troisième disques de transport (22, 24), et un quatrième disque de transport (26) étant immédiatement adjacent au troisième disque de transport (24) et étant disposé du côté du troisième disque de transport (24) opposé au deuxième disque de transport (22) à une distance axiale du troisième disque de transport (24) qui est inférieure à la distance entre le troisième disque de transport (24) et le deuxième disque de transport (22), **caractérisé en ce qu'**un premier dispositif de raclage (40) constitué d'une tôle plate, qui s'étend dans un plan s'étendant parallèlement au plan du premier disque de transport (20), vient en prise dans l'espace entre le premier et le deuxième disque de transport (20, 22) et libère des fentes étroites entre lui et le premier et le deuxième disque de transport (20, 22), et **en ce qu'**un troisième dispositif de raclage (50) constitué d'une tôle plate, qui s'étend dans un plan s'étendant parallèlement au plan du premier disque de transport (20), vient en prise dans l'espace entre le troisième et le quatrième disque de transport (24, 26), et libère des fentes étroites entre lui et le troisième et le quatrième disque de transport (24, 26).

2. Dispositif de transport (16) selon la revendication 1, **caractérisé en ce qu'**un cinquième disque de transport (28) et de préférence un sixième disque de transport (30) est ou sont disposés sous les premier à quatrième disques de transport (20-26).

3. Dispositif de transport (16) selon l'une quelconque des revendications 1 ou 2, **caractérisé en ce que** dans le cas du troisième et du quatrième disque de transport (24, 26), un dispositif d'entraînement (56) est prévu à la base des dents, lequel présente une dimension plus petite que les dents dans la direction radiale et périphérique.

4. Dispositif de transport (16) selon l'une quelconque des revendications 1 à 3, **caractérisé en ce que** les disques de transport (20-30) sont fixés de manière concentrique sur un tambour rotatif (18).

5. Dispositif de fauche et d'amenée (12) pour une machine (10) de récolte de plantes à tiges, comprenant un disque de coupe inférieur (14) et un dispositif de transport (16) disposé au-dessus de lui, pouvant être mis en rotation autour d'un axe vertical, selon l'une quelconque des revendications précédentes.

6. Machine pour recevoir une récolte, comprenant un tambour de réception muni de dents et un dispositif de transport disposé en aval du tambour de réception selon l'une quelconque des revendications 1 à 4.
